# EUROPÄISCHE PATENTANMELDUNG

(11) **EP 4 535 010 A2**
(43) Veröffentlichungstag der Anmeldung: **09.04.2025**
(21) Anmeldenummer: 25159016.2
(22) Anmeldetag: 15.03.2023
(51) Int. Cl.: G01P 3/00

(54) **MESSRINGELEMENT FÜR EIN MESSSYSTEM FÜR EIN MIKROMOBILITÄTSFAHRZEUG, MESSSYSTEM UND MIKROMOBILITÄTSFAHRZEUG**

(30) Priorität: 21.03.2022 DE 102022202716
(62) Teilanmeldung aus: 23712196.7
(71) Anmelder: ZF Friedrichshafen AG, 88046 Friedrichshafen (DE)
(72) Erfinder: Stark, Stefan, 55442 Warmsroth (DE)
(74) Vertreter: ZF Friedrichshafen AG

(57) **Zusammenfassung**

Messringelement (2) für ein Messsystem (5) für ein E-Bike (1) zur Ermittlung einer Rotationsgeschwindigkeit eines Rades (3) des E-Bikes (1). Das Messringelement (2) ist dazu eingerichtet, an dem Rad (3) des E-Bikes (1) angeordnet zu sein. Das Messringelement (2) weist ein Trägerelement (11) auf. Das Messringelement (2) weist eine Mehrzahl von voneinander beabstandeten Signalgebern (6, 6a) auf. Jeder Signalgeber (6, 6a) definiert eine Signalstrecke (7) mit einer Signalstreckenlänge. Die Signalgeber (6, 6a) sind radial um eine Mittelachse (M) des Messringelements (2) angeordnet. Das Messringelement (2) weist ein Eichelement (8) auf. Das Eichelement (8) ist zwischen zwei Signalgebern (6a) angeordnet. Das Eichelement (8) ist als materialfreie Ausnehmung des Messringelements (2) ausgeformt. Das Trägerelement (11) ist als Ringsegment ausgebildet.

## Beschreibung

Die vorliegende Erfindung betrifft ein Messringelement für ein Messsystem für ein E-Bike, ein Messsystem und ein E-Bike.

Im Bereich der E-Bikes ist es nötig, die Rotationsgeschwindigkeit eines Rades solcher Fahrzeuge zu ermitteln, um somit auf die Geschwindigkeit des Fahrzeugs schließen zu können. Messsysteme, die zu diesem Zweck verwendet werden, sollten einen Manipulationsschutz aufweisen, so dass Manipulationen in Bezug auf die zulässige Höchstgeschwindigkeit des jeweiligen E-Bikes erschwert werden.

Aus EP 3 590 812 A1 ist ein inkrementelles Messwegesystem für ein Fahrrad mit einem Manipulationsschutz zur Ermittlung einer Rotationsgeschwindigkeit eines Rades des Fahrrads relativ zu einem Fixpunkt am Fahrrad bekannt.

Der vorliegenden Erfindung liegt ausgehend vom Stand der Technik die Aufgabe zu Grunde, eine Alternative zu dem im Stand der Technik bekannten Messsystem vorzuschlagen. Diese Aufgabe wird durch die Gegenstände mit den Merkmalen der unabhängigen Patentansprüche gelöst. Weitere vorteilhafte Ausgestaltungen und Weiterbildungen gehen aus den Unteransprüchen hervor.

Ein Messringelement für ein Messsystem für ein E-Bike zur Ermittlung einer Rotationsgeschwindigkeit eines Rades des E-Bikes weist eine Mehrzahl von voneinander beabstandeten Signalgebern auf. Das Messringelement ist dazu eingerichtet, an dem Rad des E-Bikes angeordnet zu sein. Das Messringelement weist ein Trägerlement auf. Jeder Signalgeber definiert eine Signalstrecke mit einer Signalstreckenlänge Die Signalgeber sind radial um eine Mittelachse des Messringelements angeordnet. Das Messringelement weist ein Eichelement auf, wobei das Eichelement als materialfreie Ausnehmung des Messringelements ausgeformt ist, wobei das Eichelement zwischen zwei Signalgebern angeordnet ist. Das Trägerlement ist als Ringsegment ausgebildet.

"E-Bike" bezeichnet hierbei ein motorisiertes Fahrrad, das in erster Linie für den individuellen Personentransport konzipiert ist. Insbesondere umfassen E-Bikes Fahrzeuge mit elektrischem Antrieb oder Hilfsantrieb, wie unter anderem beispielsweise Pedelecs, S-Pedelecs, Velomobile, Cargobikes, etc. E-Bikes können einspurige, zweispurige oder mehrspurige Fahrzeuge sein.

Das Messringelement kann, wenn dieses bei einem vorzugsweise inkrementellen Messsystem eines E-Bikes zum Einsatz kommt, koaxial zur Rotationsachse des Rades, dessen Rotationsgeschwindigkeit bestimmt werden soll, angeordnet werden, so dass dieses mit dem Rad mitrotiert. Das Messringelement weist das Trägerlement auf, welches z. B. aus metallischem Material ausgebildet ist. Alternativ kann das Trägerlement aus einem Kunststoffmaterial, aus einem Faserkunststoffverbundmaterial oder aus anderem geeigneten Material ausgebildet sein kann. Das Trägerelement und somit das Messringelement ist dabei in Form eines Ringsegments, also als nicht vollständiger Kreisring, der einen Spalt aufweist, ausgeformt. Das Trägerlement trägt die Signalgeber und weist das Eichelement auf.

Die Signalgeber und das Eichelement sind radial um die Mittelachse herum angeordnet, wobei die Mittelachse durch eine Rotationsachse des Rades definiert ist, wenn das Messringelement in einem Messsystem eines E-Bikes verwendet wird. Beispielsweise können die Signalgeber zum Großteil rotationssymmetrisch um die Mittelachse angeordnet sein. Die Signalgeber sind beispielsweise erhaben zum Trägerelement ausgebildet, d. h. das Trägerelement definiert eine Ebene, auf welcher die Signalgeber angeordnet sind, so dass diese über diese Ebene hinausragen. Alternativ dazu sind die Signalgeber in das Trägerelement eingelassen, so dass die Signalgeber nicht über die Ebene hinausragen, die das Trägerelement definiert. Bis auf die zwei Signalgeber sind sämtliche Signalgeber vorzugsweise zueinander äquidistant angeordnet. Die Abstände zwischen den einzelnen Signalgebern sind gleichförmig ausgebildet. Lediglich der Abstand zwischen den beiden Signalgebern, zwischen welchen das Eichelement angeordnet ist, ist verschieden von den übrigen Abständen. Dadurch kann gewährleistet werden, dass eine Rotation des Rades des E-Bikes auf einfache Art und Weise detektiert werden kann.

Jeder Signalgeber weist eine Signalstrecke auf und definiert diese. Jede Signalstrecke ist in Form eines Kreissegments ausgebildet und weist eine Signalstreckenlänge auf. Die Signalstreckenlänge beeinflusst direkt die Auflösung des Sensorsignals, welches durch das Abgreifen der Signalstrecke hervorgerufen wird. Jeder Signalgeber ist vorzugsweise aus einem magnetischem Material ausgebildet. Alternativ kann jeder Signalgeber aus einem nicht magnetischen Material ausgebildet sein. Die Signalstrecke der einzelnen Signalgeber kann mittels eines Sensorelements abgegriffen werden, wenn die das Messringelement in einem Messsystem eines E-Bikes verwendet wird. Das Sensorelement kann beispielsweise als magnetischer, induktiver, kapazitiver oder optischer Sensor, Hallsensor, oder Ultraschallsensor ausgebildet sein. Insgesamt sind das Sensorelement und die Signalgeber so zu wählen, dass diese miteinander kompatibel sind, so dass das Sensorelement die Signalgeber detektieren und die Signalstrecken abgreifen kann, z. B. ist ein Hallsensor kompatibel mit einem Signalgeber aus magnetischem Material.

Das Eichelement ist ausgeformt als materialfreie Ausnehmung des Messringelements, wobei das Eichelement zwischen zwei Signalgebern angeordnet ist. Das Eichelement ist als Spalt oder Schlitz im Trägerelement des Messringelements ausgebildet, denn das Trägerelement und somit das Messringelement ist als Ringsegment ausgebildet. In anderen Worten wird das Eichelement durch das Fehlen wenigstens eines Signalgebers ausgeformt. Das Eichelement weist vorzugsweise den gleichen radialen Abstand zur Mittelachse auf wie die Signalgeber. Das Eichelement weist eine Eichstrecke auf, die in Form eines Kreissegments ausgebildet ist und eine Eichstreckenlänge aufweist. Die Eichstrecke ist in anderen Worten eine "Nicht-Signalstrecke", da diese aufgrund des Fehlens wenigstens eines Signalgebers festgelegt ist.

Werden bei der Verwendung des Messringelements in einem Messsystem eines E-Bikes mittels des Sensorelements die Signalstrecken der Signalgeber während der Rotation des Rades abgegriffen, wird mittels des Sensorelements auch die Eichstrecke detektiert. Ausgehend von den abgegriffenen Signalstrecken kann auf die Rotationsgeschwindigkeit des Rades geschlossen werden. Ausgehend von der detektierten Eichstrecke kann auf die tatsächliche Rotationsgeschwindigkeit des Rades geschlossen werden. Bei einer vollständigen Rotation des Rades des E-Bikes - und somit bei einer vollständigen Rotation des Messringelements - passiert das Eichelement das Sensorelement genau ein Mal. Dadurch ist es möglich, eine tatsächliche Vollrotation des Rades festzustellen. Einer Manipulation des Messsignals und/oder einer fehlerhaften Übermittlung des Messsignals kann so entgegengewirkt werden.

Nach einer weiterbildenden Ausführungsform definiert das Eichelement eine Eichstrecke, die eine Eichstreckenlänge aufweist, die verschieden ist von den Signalstreckenlängen der einzelnen Signalgeber. Dadurch ist gewährleistet, dass das Eichelement sicher detektiert werden kann. Einer fehlerhaften Detektion eines Zwischenraums zwischen zwei Signalgebern als Eichelement kann somit vorgebeugt werden. Beispielsweise kann das Eichelement eine Eichstrecke aufweisen, die eine Eichstreckenlänge aufweist, die doppelt oder dreimal so lang ist, wie die Signalstreckenlänge der jeweiligen Signalstrecken der Signalgeber. Das Eichelement würde also beispielsweise eine dreifache "Nicht-Signalstrecke" als Eichstreckenlänge aufweisen.

Nach einer weiterbildenden Ausführungsform sind die Signalgeber sämtlich gleichförmig zueinander ausgebildet. Sämtliche Signalgeber weisen somit dieselben Abmessungen und dasselbe Material auf. Dadurch kann gewährleistet werden, dass eine Rotation des Rades des E-Bikes auf einfache Art und Weise detektiert werden kann. Zudem ist dies bei der Herstellung des Messringelements vorteilhaft, da die Anzahl der Gleichteile erhöht wird.

Nach einer weiterbildenden Ausführungsform unterliegen die Positionen der Signalgeber und des Eichelements auf dem Messringelement einer unregelmäßigen Winkelteilung über einen Umfang des Messringelements. Die Winkelteilung entspricht somit nicht 360° / Anzahl der Elemente. Im Gegensatz zu einer exakten Winkelteilung, die 360° / Anzahl der Elemente entspricht, ist es somit möglich, die Eichstreckenlänge beliebig lang und unabhängig von den Signalstreckenlängen der jeweiligen Signalstrecken der Signalgeber zu gestalten. Über die unregelmäßige Winkelteilung ist es möglich, die Größenabweichung des Eichelements stärker zu variieren. Es müssen daher bei der Produktgestaltung keine groben Sprünge bezüglich der Eichstreckenlänge in Kauf genommen werden. Dadurch kann die Auflösung des Sensorsignals nach Bedarf gewählt werden.

Ein Messsystem für ein E-Bike zur Ermittlung einer Rotationsgeschwindigkeit eines Rades des E-Bikes weist das Sensorelement auf, welches dazu eingerichtet ist, an einem stehenden Bauelement des E-Bikes fixiert zu sein. Das Messsystem weist zusätzlich das Messringelement auf, welches an dem Rad des E-Bikes anordenbar ist, so dass das Messringelement mit dem Rad rotiert. Das Sensorelement ist zusätzlich dazu eingerichtet, bei einer Rotation des Rades ausgehend von einem Abtasten der Signalstrecken der Signalgeber und der Eichstrecke des Eichelements des Messringelements ein Sensorsignal auszugeben.

Das Sensorelement und das Messringelement wurden bereits in der vorherigen Beschreibung beschrieben. Das Messsystem ist als inkrementelles Messsystem ausgebildet. Das Sensorelement wird, wenn das Messsystem in einem E-Bike verwendet wird, an einem stehenden Bauelement des E-Bikes fixiert. Das stehende Bauelement nimmt nicht an der Rotationsbewegung des Rades des E-Bikes teil. Das stehende Bauelement kann beispielsweise als eine eine Gabel, ein Rahmen oder ein anderes geeignetes Bauelement des E-Bikes ausgebildet sein. Das stehende Bauelement sollte derart gewählt werden, dass das Sensorelement so befestigt werden kann, dass dieses die Signalgeber und das Eichelement während der Rotation des Rades ungehindert erfassen kann.

Das Sensorelement generiert ein Sensorsignal, welches am Sensorelement abgegriffen werden kann. Das Sensorsignal kann beispielsweise im Anschluss ausgewertet werden mittels einer Auswerteeinrichtung eines Steuergeräts des E-Bikes. Das Sensorsignal wird dann generiert, wenn das Messringelement mit dem Rad des E-Bikes mitrotiert und die Signalgeber und das Eichelement am Sensorelement vorbeirotieren, wodurch es zu einer Wechselwirkung zwischen dem Sensorelement und den Signalgebern und dem Eichelement kommt.

Ein E-Bike mit wenigstens einem Rad weist das Messsystem auf, das bereits in der vorherigen Beschreibung beschrieben wurde. Das Messringelement ist an dem Rad angeordnet, so dass das Messringelement mit dem Rad rotiert. Das Sensorelement ist an einem stehenden Bauelement des E-Bikes fixiert, so dass die Signalstrecken der Signalgeber und die Eichstrecke des Eichelements des Messringelements mittels des Sensorelements abtastbar sind. Die Abtastung der Signalstrecken und der Eichstrecke erfolgt nur dann, wenn das Rad und somit auch das Messringelement rotiert. Dies wurde bereits in der vorherigen Beschreibung beschrieben.

Anhand der im Folgenden erläuterten Figuren werden verschiedene Ausführungsbeispiele und Details der Erfindung näher beschrieben. Es zeigen beispielhaft:
- Fig. 1: eine schematische Darstellung eines E-Bikes mit einem Messsystem nach einem Ausführungsbeispiel,
- Fig. 2: eine schematische Darstellung eines Messringelements nach einem nicht beanspruchten Ausführungsbeispiel,
- Fig. 3: eine schematische Darstellung eines Messringelements nach einem weiteren nicht beanspruchten Ausführungsbeispiel,
- Fig. 4: eine schematische Darstellung eines Messringelements nach einem weiteren nicht beanspruchten Ausführungsbeispiel,
- Fig. 5: eine schematische Darstellung eines Messringelements nach einem weiteren Ausführungsbeispiel.

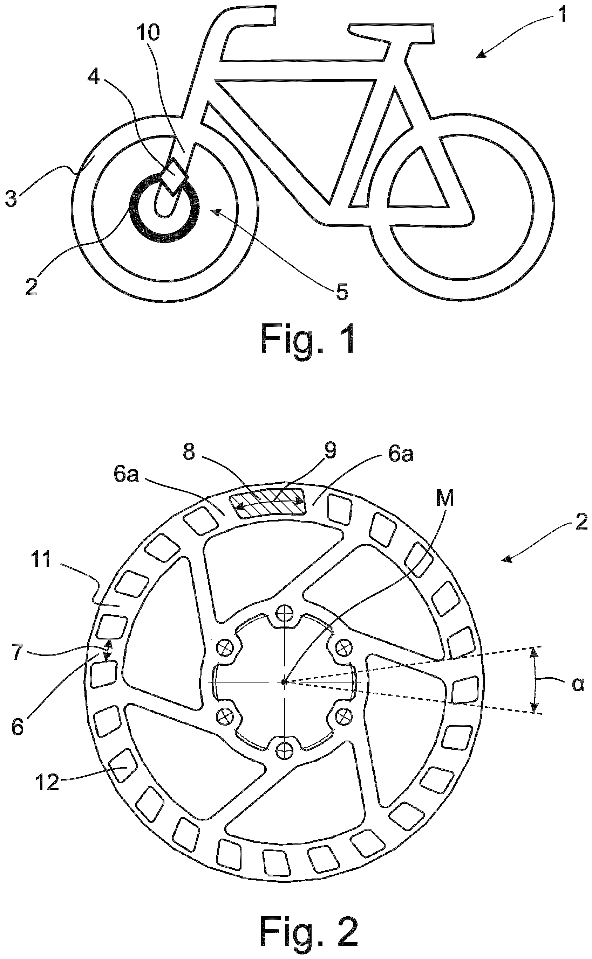

Fig. 1 zeigt eine schematische Darstellung eines E-Bikes 1 mit einem Messsystem 5 nach einem Ausführungsbeispiel. Das E-Bike 1 ist hier beispielhaft als (S-) Pedelec dargestellt. Das E-Bike 1 weist zwei Räder 3 und ein stehendes Bauelement 10, z. B. eine Gabel, auf. Im Bereich des Vorderrades 3 ist das Messsystem 5 angeordnet. Das Messsystem 5 kann alternativ dazu selbstverständlich auch am Hinterrad angeordnet werden.

Das Messsystem 5 ist als inkrementelles Messsystem 5 ausgebildet. Das Messsystem 5 weist ein Messringelement 2 und ein mit dem Messringelement 2 kompatibles Sensorelement 4 auf. Das Messringelement 2 ist vorzugsweise nach einem der Ausführungsbeispiele aus den Figuren 2 bis 5 ausgeformt.

Das Messringelement 2 ist am Vorderrad 3 des E-Bikes 1 angeordnet, so dass dieses mit dem Rad 3 mitrotiert. Das Messringelement 2 ist auf der Radachse des Vorderrads 3 angebracht, wobei die Radachse koaxial zu einer Mittelachse M des Messringelements 2 verläuft. Das Sensorelement 4 ist an der Gabel des E-Bikes 1 fixiert, wobei die Gabel ein stehendes Bauelement 10 des E-Bikes 1 darstellt.

Rotiert nun das Rad 3 um die Achse, vollführt das Messringelement 2 dieselbe Rotationsbewegung. Das Messringelement 2 rotiert an dem Sensorelement 4 vorbei. Dabei detektiert das Sensorelement 4 die Signalgeber 6, 6a und das Eichelement 8, die das Messringelement 2 aufweist. Das Sensorelement 4 greift die Signalstrecken 7 und die Eichstrecke 9 ab. Ausgehend davon generiert das Sensorelement 4 ein Sensorsignal, welches beispielsweise an ein Steuergerät der E-Bikes 1 weitergeleitet werden kann. Mittels des generierten Sensorsignals ist eine Bestimmung der tatsächlichen Rotationsgeschwindigkeit des Rades 3 möglich.

Fig. 2 zeigt eine schematische Darstellung eines Messringelements 2 nach einem nicht beanspruchten Ausführungsbeispiel. Das Messringelement 2 ist als Kreisring ausgebildet und weist ein Trägerelement 11 auf, welches eine Mehrzahl an Signalgebern 6, 6a trägt und das Eichelement 8 aufweist. Zur besseren Übersicht sind nur drei Signalgeber mit Bezugszeichen versehen. Sämtliche Signalgeber 6, 6a sind gleichförmig zueinander ausgebildet. Das Eichelement 8 ist zwischen zwei Signalgebern 6a angeordnet und wird von diesen in radialer Richtung begrenzt. Sämtliche Signalgeber 6, außer die beiden Signalgeber 6a, zwischen welchen das Eichelement 8 angeordnet ist, sind äquidistant zueinander angeordnet, wobei zwischen jeweils zweien dieser Signalgebern 6 ein materialfreier Zwischenraum 12 angeordnet ist. Die Zwischenräume 12 sind sämtlich gleichförmig zueinander ausgeformt. Die Zwischenräume 12 sind hier als Fenster ausgeformt, was bezüglich einer Masse des Messringelements vorteilhaft ist. Das Eichelement 8 und die Signalgeber 6, 6a sind auf dem Trägerelement 11 radial um die Mittelachse M angeordnet. Die Signalgeber 6, 6a sind zu einem Großteil rotationssymmetrisch zur Mittelachse M angeordnet.

Das Messringelement 2 weist insgesamt 23 Signalgeber 6, 6a auf. Jeder der Signalgeber 6, 6a weist eine Signalstrecke 7 auf, die eine gewisse Signalstreckenlänge aufweist. Die Signalstecken 7 sämtlicher Signalgeber 6, 6a weisen die gleiche Signalstreckenlänge auf. Beispielsweise kann die Signalstreckenlänge ebenso groß sein wie der radiale Abstand zwischen zwei Signalgebern 6, zwischen welchen kein Eichelement angeordnet ist. Die Signalgeber 6, 6a sind vorzugsweise aus einem magnetischen Material ausgeformt.

Das Eichelement 8 weist eine Eichstrecke 9 auf, die einen Eichstreckenlänge aufweist. Die Eichstreckenlänge ist länger ausgebildet als eine einzelne Signalstreckenlänge. Hier ist die Eichstreckenlänge so lang wie sie Summe einer Signalstreckenlänge und zweier Abstände zwischen zwei Signalgebern. Das Eichelement 8 ist als materialfreie Ausnehmung, nämlich als Fenster, in dem Trägerelement 11 ausgeformt. Das Eichelement 8 ersetzt in anderen Worten einen Signalgeber 6 inklusive zweier Zwischenräume 12. Die Eichstrecke 9 stellt in anderen Worten eine "Nicht-Signalstrecke" dar.

Die Positionen der Signalgeber 6, 6a und des Eichelements 8 unterliegen einer regelmäßigen Winkelteilung über den Umfang des Messringelements 2. Diese Winkelteilung beträgt: 360° / (Anzahl der Signalgeber + Anzahl der durch das Eichelement ersetzten Signalgeber). Die Winkelteilung beträgt somit α = 360°/24 = 15°. Das heißt, dass jeder Signalgeber 6, 6a um 15° versetzt zu dem vorherigen Signalgeber 6, 6a angeordnet ist, ausgenommen die beiden Signalgeber 6a, zwischen welchen sich das Eichelement 8 befindet. Das Eichelement 8 ist direkt benachbart zu seinem vorlaufenden oder nachlaufenden Signalgeber 6a angeordnet.

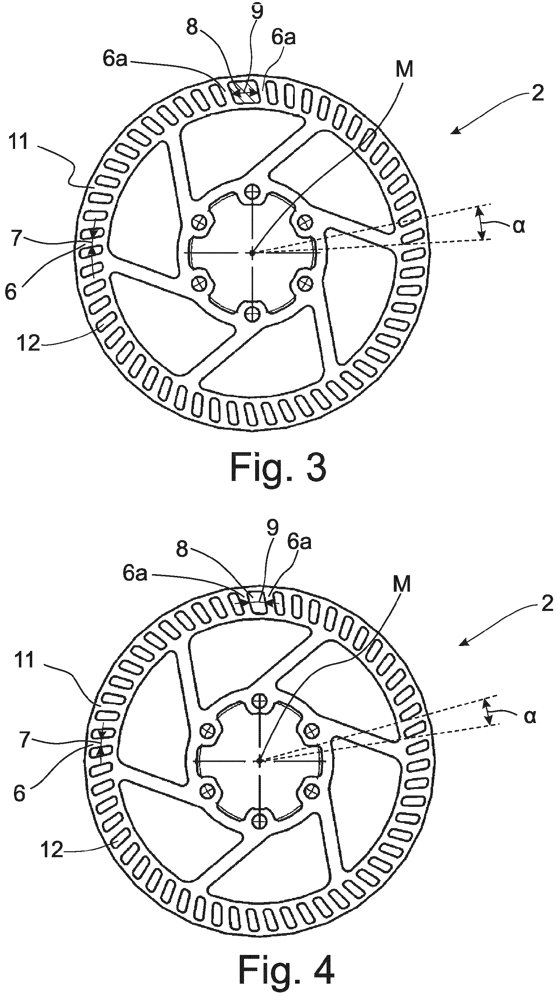

Fig. 3 zeigt eine schematische Darstellung eines Messringelements 2 nach einem nicht beanspruchten Ausführungsbeispiel. Prinzipiell ist die Ausformung des Messringelements 2 sehr ähnlich zum Messringelement 2 aus Fig. 2. Der Unterschied besteht lediglich in der Anzahl und Anordnung der Signalgeber 6, 6a sowie in der Ausformung des Eichelements 8. Mit der in Fig. 3 gezeigten Ausformung des Messringelements 3 wird eine höhere Auflösung für das zu generierende Sensorsignal erreicht.

Das Messringelement 2 weist insgesamt 55 Signalgeber 6, 6a auf. Jeder der Signalgeber 6, 6a weist eine Signalstrecke 7 auf, die eine gewisse Signalstreckenlänge aufweist. Die Signalstecken 7 sämtlicher Signalgeber 6, 6a weisen die gleiche Signalstreckenlänge auf. Beispielsweise kann die Signalstreckenlänge ebenso groß sein wie der radiale Abstand, also der Zwischenraum 12, zwischen zwei Signalgebern 6, zwischen welchen kein Eichelement angeordnet ist. Die Signalgeber 6, 6a sind vorzugsweise aus einem magnetischen Material ausgeformt.

Das Eichelement 8 weist eine Eichstrecke 9 auf, die einen Eichstreckenlänge aufweist. Die Eichstreckenlänge ist länger ausgebildet als eine einzelne Signalstreckenlänge. Hier ist die Eichstreckenlänge so lang wie sie Summe einer Signalstreckenlänge und zweier Abstände zwischen zwei Signalgebern. Das Eichelement 8 ist als materialfreie Ausnehmung, nämlich als Fenster, in dem Trägerelement 11 ausgeformt. Das Eichelement 8 ersetzt in anderen Worten einen Signalgeber 6 inklusive zweier Zwischenräume 12. Die Eichstrecke 9 stellt in anderen Worten eine "Nicht-Signalstrecke" dar.

Die Positionen der Signalgeber 6, 6a und des Eichelements 8 unterliegen einer regelmäßigen Winkelteilung über den Umfang des Messringelements 2. Diese Winkelteilung beträgt: 360° / (Anzahl der Signalgeber + Anzahl der durch das Eichelement ersetzten Signalgeber). Die Winkelteilung beträgt somit α = 360°/56 = 6,43°. Das heißt, dass jeder Signalgeber 6, 6a um 6,43° versetzt zu dem vorherigen Signalgeber 6, 6a angeordnet ist, ausgenommen die beiden Signalgeber 6a, zwischen welchen sich das Eichelement 8 befindet. Das Eichelement 8 ist direkt benachbart zu seinem vorlaufenden oder nachlaufenden Signalgeber 6a angeordnet.

Fig. 4 zeigt eine schematische Darstellung eines Messringelements 2 nach einem nicht beanspruchten Ausführungsbeispiel. Prinzipiell ist die Ausformung des Messringelements 2 sehr ähnlich zum Messringelement 2 aus Fig. 2 und Fig. 3. Der Unterschied besteht lediglich in der Anzahl und Anordnung der Signalgeber 6, 6a sowie in der Ausformung des Eichelements 8. Mit der in Fig. 4 gezeigten Ausformung des Messringelements 3 wird eine höhere Auflösung für das zu generierende Sensorsignal erreicht.

Das Messringelement 2 weist insgesamt 55 Signalgeber 6, 6a auf. Jeder der Signalgeber 6, 6a weist eine Signalstrecke 7 auf, die eine gewisse Signalstreckenlänge aufweist. Die Signalstecken 7 sämtlicher Signalgeber 6, 6a weisen die gleiche Signalstreckenlänge auf. Die Signalgeber 6, 6a sind vorzugsweise aus einem magnetischen Material ausgeformt.

Das Eichelement 8 weist eine Eichstrecke 9 auf, die einen Eichstreckenlänge aufweist. Die Eichstreckenlänge ist länger ausgebildet als eine einzelne Signalstreckenlänge. Hier ist die Eichstreckenlänge so lang wie sie Summe einer Signalstreckenlänge und zweier Abstände zwischen zwei Signalgebern. Das Eichelement 8 ist als materialfreie Ausnehmung, nämlich als Fenster, in dem Trägerelement 11 ausgeformt. Das Eichelement 8 ersetzt in anderen Worten einen Signalgeber 6 inklusive einen Zwischenraum 12. Die Eichstrecke 9 stellt in anderen Worten eine "Nicht-Signalstrecke" dar.

Die Positionen der Signalgeber 6, 6a und des Eichelements 8 unterliegen einer unregelmäßigen Winkelteilung über den Umfang des Messringelements 2. Die Winkelteilung beträgt hier α = 6,5°. Das heißt, dass jeder Signalgeber 6, 6a um 6,5° versetzt zu dem vorherigen Signalgeber 6, 6a angeordnet ist, ausgenommen die beiden Signalgeber 6a, zwischen welchen sich das Eichelement 8 befindet. Das Eichelement 8 ist direkt benachbart zu seinem vorlaufenden oder nachlaufenden Signalgeber 6a angeordnet. Durch die unregelmäßige Winkelteilung ist es möglich, dass die Eichstreckenlänge der Eichstrecke 9 beliebig lang und unabhängig von den Signalstreckenlängen der jeweiligen Signalstrecken 7 der Signalgeber 6, 6a gestaltet werden kann. Über die unregelmäßige Winkelteilung ist es somit möglich, die Größenabweichung des Eichelements 8 stärker zu variieren.

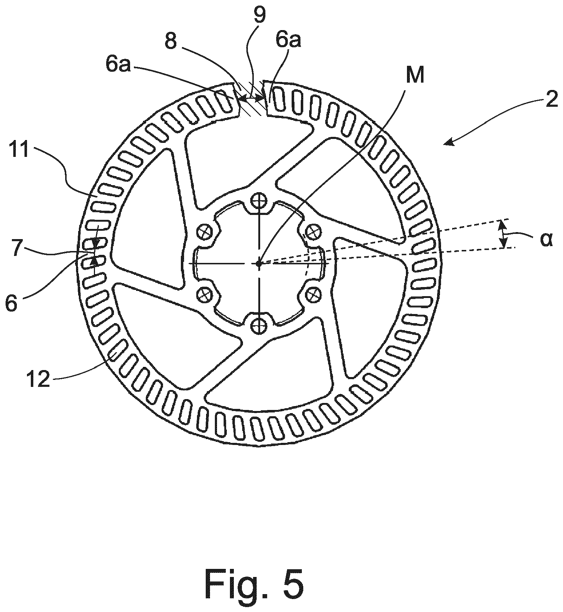

Fig. 5 zeigt eine schematische Darstellung eines Messringelements 2 nach einem Ausführungsbeispiel. Prinzipiell ist die Ausformung des Messringelements 2 sehr ähnlich zum Messringelement 2 aus Fig. 3. Die Signalgeber 6, 6a, die Anzahl der Signalgeber 6, 6a, die Anordnung der Signalgeber 6, 6a, die Signalstreckenlängen, die Eichstreckenlänge und die regelmäßige Winkelteilung sind ebenso ausgeformt wie in Fig. 3. Der Unterschied besteht lediglich in der Ausformung des Eichelements 8 und in der Ausformung des Trägerelements 11. Das Trägerelement 11 und somit das gesamte Messringelement 2 ist als Ringsegment ausgeformt.

Das Eichelement 8 ist als materialfreie Ausnehmung, nämlich als Spalt, in dem Trägerelement 11 ausgeformt. Das Eichelement 8 weist die Eichstrecke 9 auf, die die Eichstreckenlänge aufweist. Die Eichstreckenlänge entspricht der Eichstreckenlänge aus Fig. 3.

Die hier dargestellten Beispiele sind nur beispielhaft gewählt. Die Winkelteilung, die Anzahl der Signalgeber, die Signalstreckenlängen der Signalstrecken der Signalgeber und die Eichstreckenlänge der Eichstrecke des Eichelement kann je nach Bedarf und gewünschter Auflösung angepasst werden.

### Bezugszeichen

- 1: E-Bike
- 2: Messringelement
- 3: Rad
- 4: Sensorelement
- 5: Messsystem
- 6: Signalgeber
- 6a: Signalgeber
- 7: Signalstrecke
- 8: Eichelement
- 9: Eichstrecke
- 10: stehendes Bauelement
- 11: Trägerelement
- 12: Zwischenraum
- M: Mittelachse
- α: Winkel

## Patentansprüche

1. Messringelement (2) für ein Messsystem (5) für ein E-Bike (1) zur Ermittlung einer Rotationsgeschwindigkeit eines Rades (3) des E-Bikes (1), wobei das Messringelement (2) dazu eingerichtet ist, an dem Rad (3) des E-Bikes (1) angeordnet zu sein, wobei das Messringelement (2) ein Trägerlement (11) aufweist, wobei das Messringelement (2) eine Mehrzahl von voneinander beabstandeten Signalgebern (6, 6a) aufweist, wobei jeder Signalgeber (6, 6a) eine Signalstrecke (7) mit einer Signalstreckenlänge definiert, wobei die Signalgeber (6, 6a) radial um eine Mittelachse (M) des Messringelements (2) angeordnet sind, wobei das Messringelement (2) ein Eichelement (8) aufweist, wobei das Eichelement (8) zwischen zwei Signalgebern (6a) angeordnet ist, **dadurch gekennzeichnet, dass** das Eichelement (8) als materialfreie Ausnehmung des Messringelements (2) ausgeformt ist, und dass das Trägerlement (11) als Ringsegment ausgebildet ist.

2. Messringelement (2) nach Anspruch 1, **dadurch gekennzeichnet, dass** das Eichelement (8) eine Eichstrecke (9) definiert, die eine Eichstreckenlänge aufweist, die verschieden ist von den Signalstreckenlängen der einzelnen Signalgeber (6, 6a).

3. Messringelement (2) nach einem der vorherigen Ansprüche, **dadurch gekennzeichnet, dass** die Signalgeber (6, 6a) gleichförmig zueinander ausgebildet sind.

4. Messringelement (2) nach einem der vorherigen Ansprüche, **dadurch gekennzeichnet, dass** die Positionen der Signalgeber (6, 6a) und des Eichelements (8) auf dem Messringelement (2) einer unregelmäßigen Winkelteilung über einen Umfang des Messringelements (2) unterliegen.

5. Messsystem (5) für ein E-Bike (1) zur Ermittlung einer Rotationsgeschwindigkeit eines Rades (3) des E-Bikes (1), wobei das Messsystem (5) ein Sensorelement (4) aufweist, welches dazu eingerichtet ist, an einem stehenden Bauelement (10) des E-Bikes (1) fixiert zu sein, **dadurch gekennzeichnet, dass** das Messsystem (5) zusätzlich ein Messringelement (2) nach einem der vorherigen Ansprüche aufweist, welches an dem Rad (3) des E-Bikes (1) anordenbar ist, so dass das Messringelement (2) mit dem Rad (3) rotiert, wobei das Sensorelement (4) zusätzlich dazu eingerichtet ist, bei einer Rotation des Rades (3) ausgehend von einem Abtasten der Signalstrecken (7) der Signalgeber (6, 6a) und der Eichstrecke des Eichelements (8) des Messringelements (2) ein Sensorsignal auszugeben.

6. E-Bike (1) mit wenigstens einem Rad (3), **dadurch gekennzeichnet, dass** das E-Bike (1) ein Messsystem (5) nach Anspruch 5 aufweist, wobei das Messringelement (2) an dem Rad (3) angeordnet ist, so dass das Messringelement (2) mit dem Rad (3) rotiert, wobei das Sensorelement (4) an einem stehenden Bauelement (10) des E-Bikes (1) fixiert ist, so dass die Signalstrecken (7) der Signalgeber (6, 6a) und die Eichstrecke (9) des Eichelements (8) des Messringelements (2) mittels des Sensorelements (4) abtastbar sind.
